Europäisches Patentamt

European Patent Office

Office européen des brevets

(11) Publication number: **0 093 594**
**A2**

(12) **EUROPEAN PATENT APPLICATION**

(21) Application number: 83302434.2

(22) Date of filing: 29.04.83

(51) Int. Cl.³: **B 23 K 3/06**

(30) Priority: 30.04.82 GB 8212706

(43) Date of publication of application:
09.11.83 Bulletin 83/45

(84) Designated Contracting States:
CH DE FR GB IT LI

(71) Applicant: MULTICORE SOLDERS LIMITED
Kelsey House Wood Lane End
Hemel Hempstead Hertfordshire HB2 4RQ(GB)

(72) Inventor: Daniel, Graham Thomas
8 Mabbut Close Brickett Wood
St. Albans Hertfordshire AL2 3RZ(GB)

(74) Representative: Silverman, Warren et al,
HASELTINE LAKE & CO. Hazlitt House 28 Southampton
Buildings Chancery Lane
London WC2A 1AT(GB)

(54) Solder dispenser and soldering apparatus comprising the same.

(57) A solder dispenser which avoids the problem of melting and resolidification of solder therein and thereadjacent comprises drive means (10) which convey forward the forward end of an elongate solder body and is able to retract the solder body from a position of application. Control means (4) operates on the drive means (10) to retract solder from this position to a stand-by position after each solder application.

FIG.3.

EP 0 093 594 A2

"SOLDER DISPENSER AND SOLDERING APPARATUS COMPRISING THE SAME"

This invention relates to a solder dispenser and to its use as part of a soldering gun.

Solders are a type of fusible alloy utilised as bonding agents in joining the edges of less fusible metals together. To melt the solders, heat is applied locally using a soldering iron. The soldering is conventionally carried out by hand and requires the use of both hands, one hand holding the soldering iron while the other holds and feeds the solder. The solder is moved to the tip of the soldering iron bit and, with continued pressure, delivered in the required amount. The end of the solder is subsequently removed as the soldering iron is allowed to stay in contact with the workpiece as required.

To simplify operation and in particular enable one-handed operation to be carried out, there have been proposed a number of forms of soldering apparatus which essentially comprise a combined soldering iron and solder dispenser apparatus, the latter commonly being in the form of a pistol and comprising mechanical feed means usually of the ratchet type for advancing a solder rod from a reel on which it is wound. Examples of apparatus of this type are disclosed in British Patent Specifications Nos. 507,997, 617,661 and 1,258,086 and in published British Patent Application No.2,057,323.

It is a common defect of these forms of apparatus that the mechanical means employed for feeding the solder is able to operate in one sense only. This means that when solder has been delivered in sufficient quantity to the joint position on a workpiece, and a break has been made between solder to be used and solder for subsequent use, the latter solder will still be adjacent the joint position at which the soldering iron bit will then be operating. As a consequence, melting

In its simplest constructional form, however, the solder dispenser of this invention is designed merely to clip onto the handle of a soldering iron for manual operation. The dispenser may then comprise a mounting clip and handling part with an integral master push-button control and an electronic control box.

The solder dispenser of this invention will usually comprise an electric drive for transporting the solder body therethrough. The drive means is preferably electronically programmed so that it effects retraction of solder from the dispenser outlet after delivery of a predetermined quantity of solder and before solder not to be applied to the workpiece has been heated by the soldering bit. It is indeed practicable for all of the functions of the dispenser to be electronically controllable and therefore they may be easily used in conjunction with the temperature control of the soldering iron, the gauge of solder being used and the type of work being carried out. These functions may be readily interfaced to a computer to form an automative system of soldering as the soldering iron is positioned, employing currently established computer software techniques as employed in robotic arm operations so that synchronous operation of solder dispenser, soldering apparatus and robotic arm may be achieved.

For a better understanding of the invention and to show how the same can be carried into effect, reference will now be made, by way of example only, to the accompanying drawings wherein:-

FIGURE 1 is a plan view of an electronic solder dispenser embodying the invention for clip mounting on a soldering iron;

FIGURE 2 is a front view partially in section of the device of Figure 1;

FIGURE 3 is a perspective view of the dispenser of Figures 1 and 1a mounted on a soldering iron;

FIGURE 4 shows an appropriate power supply and multispeed control circuit for the dispenser of the invention; and

FIGURE 5 shows an electronic timing and logic control circuit for the dispenser of the invention.

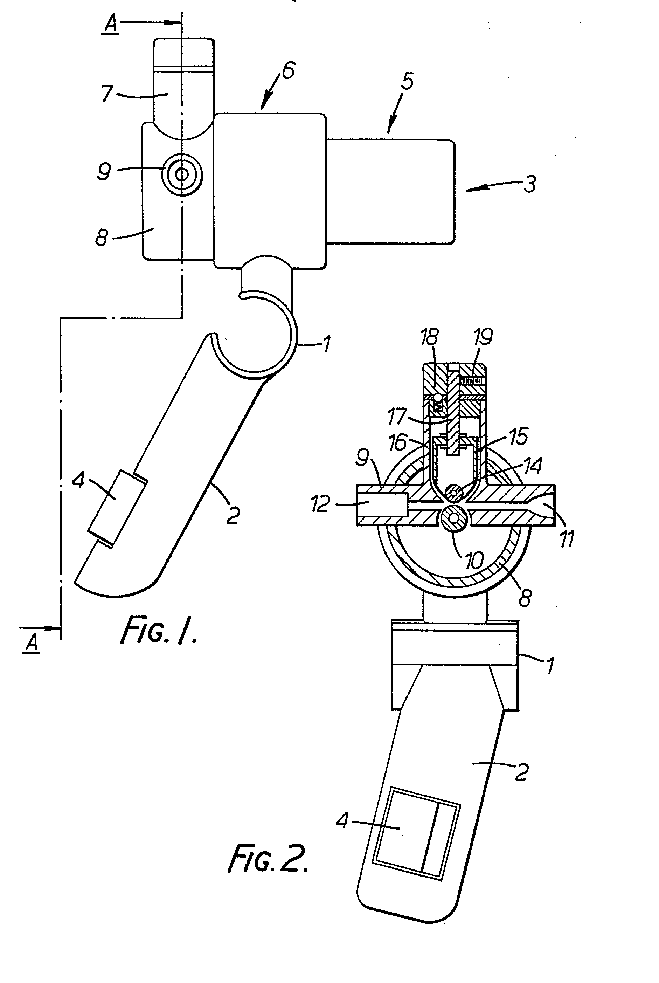

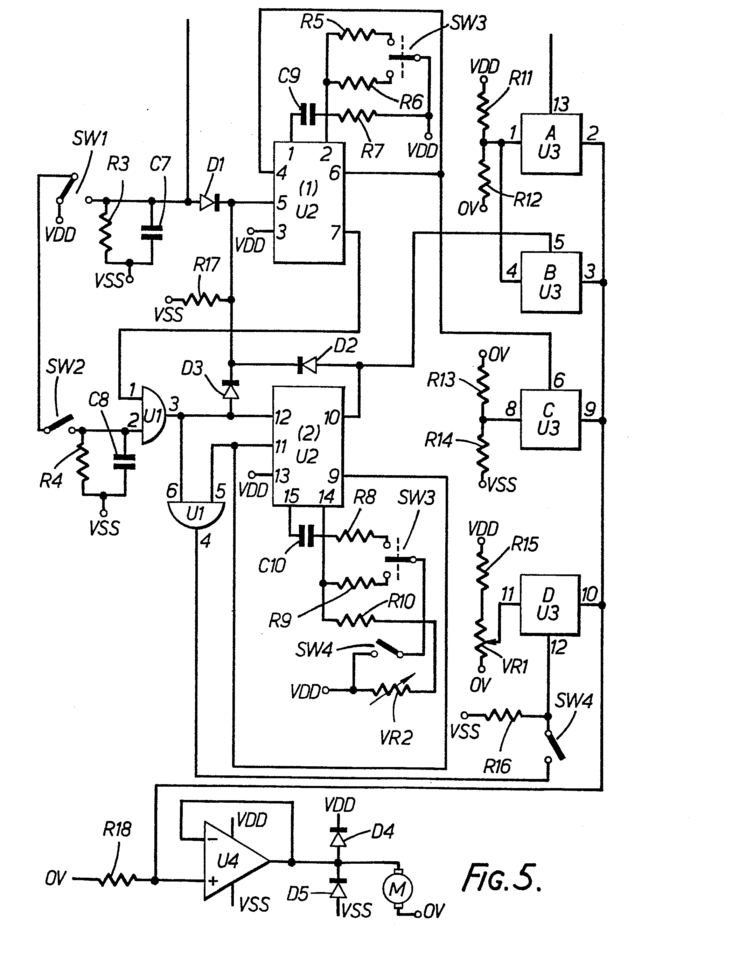

Referring to Figures 1 to 3 of the drawings, an electronic solder dispenser embodying this invention comprises a mounting clip 1 which may be employed with spacers (not shown) to fit any one of a wide variety of soldering irons. The mounting clip is positioned at a transitional point between a handle 2 and a main body part shown generally at 3 through which solder is to be delivered. The handle is shown carrying a master push-button control 4. However this control button may alternatively be located as a foot switch or at any other convenient position. The main dispenser body 3 can be seen from Figure 1 to comprise three essential parts, namely a drive motor 5 which may be of the direct current type and is geared down through a reduction gear box 6 to complement the electronic speed control to be described hereinafter. The motor and gearbox will be selected in accordance with the requirements of a particular industry. Finally, the dispenser body 3 comprises a solder gauge adjustment device 7 which surmounts a central body 8 through which passes a duct 9 for solder. The solder gauge adjustment device enables solder wires of a variety of gauges to be employed and, as shown in the sectional view of Figure 2 which is taken at A-A in Figure 1, the solder gauge adjustment device comprises a main drive roller 10 for solder wire entering the duct 9 at its entrance 11 to leave it through the outlet 12 to pass into a delivery tube 13 (see Figure 3) and a jockey roller 14 whose height is to be adjusted in accordance with the gauge of solder wire. The jockey roller 14 is carried by a plunger 15 in a cylindrical housing 16 in which it is carried on a plunger drive 17 in screw threaded engagement therewith. The plunger is allowed to assume a stable position in the housing 16 by means of a spring loaded locating ball bearing 18 and final setting through a locking screw 19.

The assembled soldering apparatus can be seen from Figure 3 to be made up of the dispenser of Figures 1 and 2 mounted at its mounting clip 1 on a soldering iron 20 comprising a cable 21 for supply of heat thereto while cable 22 serves to supply power to the dispenser. Adjacent the outlet 23 from the delivery tube 13 of the dispenser is a solder bit 24.

The electronic control box is not shown in Figures 1 to 3. However it will have an integral power supply and generally comprise a load push-button control (not shown) with indicator light and a potentiometer control which determines the speed at which the solder is to be driven. The circuit diagram of the power supply and the motor speed control is shown in Figure 4.

The electronic timing and logic control circuit for achieving operation in accordance with the invention is shown in Figure 5.

The general operation of the solder dispenser of Figures 1 to 3 is as follows. The mounting clip 1 is attached to the soldering iron to attach the dispenser thereto. Power is switched on and the end of a source of solder wire (not shown) is positioned at the entrance 11 to the duct through the dispenser which will be adjusted for the correct gauge of solder. The load button is depressed on the control box. An indicator light is illuminated while the solder is driven fast through the delivery tubing to the tip of the soldering iron bit. When the solder arrives at the bit, the button is released and the solder retracts at the programmed fast speed for a programmed time and hence distance. The device is now in a standby condition. This retraction of solder from the tip area enables the bit to be accessible for normal cleaning operations. The shaft of the soldering iron is also left clear so that the use of a conventional soldering iron stand may

0093594

be retained.

When the master push-button control 4 is operated, operation is now typically as follows. Solder is moved to the soldering iron tip at a programmed fast speed for a programmed time. If the button is continued to be pushed, then solder will be dispensed at a rate controllable by the potentiometer on the front panel of the control box. This function is continuously variable so that account may be taken of the temperature control setting of the soldering iron, if fitted, the gauge of solder being used, the type of work being carried out or any other prevailing conditions. When the button 4 is released, the solder retracts at the programmed fast speed for the program time as the device is returned to a standby condition and unwanted solder is not located at an undesirable position at the end of the delivery tube or at the solder bit. As will be apparent from reference to the circuit diagrams, the electronic control device is non-retriggerable during the programmed fast speed mode of operation so as to prevent unintentional redelivery of solder at such times.

Referring specifically to the circuit diagrams of Figures 3 and 4, with a views to the mains powered electronic control box being capable of operation from a power supply of 110/240 volts a.c. r.m.s. 50/60 Hz, an integral power supply provides a split regulated voltage $V_{DD}$-0-$V_{SS}$ fed to a linear integrated circuit to provide the power to drive the feed motor. This circuit has built-in output short-circuit and thermal overload protection.

A load switch SW1 is mounted on the front panel of the control box which allows the solder to be delivered to the tip of the soldering iron at a programmed fast speed and then retract at a programmed fast speed to a standby position. This position is determined by a ranging switch SW3 which is mounted internally of the control box. Switch SW3 adjusts the time constants on a dual monostable multivibrator U2 which programmes the IN/OUT timing.

When switch SW1 is depressed, the control input on quad switch A, U3 is activated to allow the voltage sensed at pin 1, U3 derived from resistors R11 and R12 to be fed to a voltage follower U4. The output of a radio amplifier associated with voltage follower U4 provides the power to drive the motor.

When switch SW1 is released, part (1) of the dual monostable monovibrator U2 is negatively triggered to activate the control input on switch C, U3 for the duration of a time constant set by capacitors C9 and resistors R5, R6 and R7. The negative voltage sensed at pin 8, U3 derived from resistors R13 and R14 is fed to the voltage follower U4 which drives the motor in reverse to take the solder to the standby position.

A function switch SW4 mounted on the front panel of the control box allows the modes of SET or VAR to be selected. When operation is in the SET mode, measured quantities, adjustable by the potentiometer VR2, are delivered to the tip of the soldering iron. When in the VAR mode, variable quantities are delivered at variable speed, adjustable by variable resistance VR1 to the tip of the soldering iron. The master switch, here denoted by SW2, which is mounted on the handle of the solder dispenser, or provided as a foot switch, allows operation of the dispenser under whichever mode of operation has been prescribed.

Operation in the SET mode takes place as follows. With the contacts of switch SW4 open, the master switch SW2 is depressed and released part (2) of the dual monostable multivibrator U2 is positively triggered to activate the control input on switch B, U3 for the duration of a time constant set by capacitor C10 and resistors R8, R9, R10 and potentiometer VR2. The potentiometer VR2 modifies the time constant to set the quantity of solder required at the tip. The positive voltage sensed at pin 4, U3, derived from resistors R11 and R12 is fed to the voltage follower U4 to drive the motor at the programmed fast speed. When part (2) of the dual monostable multivibrator U2 returns to its normal state, the transition negatively triggers part (1). The control input on switch C, U3 is activated for the duration of the time constant set by capacitor C9 and resistors R5, R6 and R7. The negative voltage sensed at pin 8, U3 derived from resistors R13 and R14 is fed to the voltage follower U4 which drives the motor in reverse at the programmed fast speed to take the solder back to the standby position. The circuit is designed to be non-retriggerable in that once initiated, the cycle will be completed. The nature of the motor drive controls the voltage at the motor terminals and therefore imparts dynamic braking which improves the accuracy of the device.

When the contacts of switch SW4 are closed, operation in the VAR mode is able to take place. Thus, when the master switch SW2 is depressed, part (2) of the dual monostable multivibrator U2 is positively triggered, activating the control input on switch B, U3 for the duration of the time constant set by capacitor C10 and resistors R8, R9 and R10. The positive voltage sensed at pin 4, U3 derived from resistors R11 and R12 is fed to the voltage follower U4 to drive the motor at the programmed fast speed. If switch SW2 is continued to be depressed beyond the duration of the time constant, then owing to the presence of the AND gate U1, the control input on switch D, U3 is activated. The positive voltage sensed at pin 11, U3 derived from variable resistor VR1 and resistor R15 is fed to the voltage follower U4 to drive the motor at the speed set by variable resistor VR1. When the required amount of solder has been fed to the tip of the iron, the master switch SW2 is released. The transition at this time will negatively trigger part (1) of the dual monostable multivibrator U2. The control input on switch C, U3 is activated for the duration of the time constant set by capacitor C9 and resistors R5, R6 and R7. The negative voltage sensed at pin 8, U3, derived from resistors R13 and R14 is fed to the voltage follower U4 which drives the motor in reverse at the programmed fast speed to take the solder back to the standby position.

Claims

1.    A solder dispenser on or for use on a soldering apparatus, which dispenser comprises a body portion (8), means (1) mounting or for mounting the body portion on a soldering apparatus (20) comprising a soldering bit (24) and means (21) for heating said soldering bit and means (10) comprised by the body portion for transporting solder from one part of the body portion to a position (23) at or to be at the soldering bit, characterised in that said transporting means comprises means (10) for conveying a forward end of an elongate solder body towards said position and for retracting the solder body from said position and control means (4) associated with said transporting means for achieving retraction of the solder body from said position to a standby position after each solder application.

2.    A solder dispenser as claimed in claim 1, wherein said transporting means comprises an electrically powered drive motor (5) having associated electronic control means which comprises switch means (4) which when in a first position allows solder to be delivered at a programmed speed for a programmed time and on release retracts the solder at a programmed speed for a programmed time to a standby position.

3.    A solder dispenser as claimed in claim 2, wherein the electronic control means is operable according to a set mode, with predetermined quantities of solder being delivered for each actuation in the set mode the circuit of the electronic control means being non-retriggerable.

4.    A solder dispenser as claimed in claim 2 or 3, wherein the electronic control means is operable according to a variable mode whereby variable quantities of solder may be delivered at variable speed.

5.    A solder dispenser as claimed in any one of claims 2 to 4, wherein the electronic control means comprises a control input (C, U3) which allows a sensed voltage in the electronic control means to be fed to a voltage follower (U4) having an audio amplifier which provides the power to drive the motor.

6. A solder dispenser as claimed in any one of claims 2 to 4 which additionally comprises a reduction gear box (6) operable in association with electronic speed control achieved therein.

7. A solder dispenser as claimed in any one of the preceding claims whose controls are interfaced to a computer to form a fully automated system of soldering.

8. A solder dispenser as claimed in claim 7, which is in operative association with a soldering apparatus carried on a robotic arm for operation in synchronisation of the soldering dispenser, the soldering apparatus and the robotic arm.

9. A solder dispenser as claimed in any one of the preceding claims, which additionally comprises solder gauge adjustment means comprising an adjustable plunger (15) carrying a jockey roller (14) for contacting solder wire during the passage thereof through the dispenser.

*Fig. 1.*

*Fig. 2.*

0093594

3/3

Fig.5.